# EUROPEAN PATENT SPECIFICATION

(11) **EP 3 315 415 B1**
(45) Date of publication and mention of the grant of the patent: **19.08.2020**
(21) Application number: 16745501.3
(22) Date of filing: 22.06.2016
(51) Int. Cl.: B64F 1/26

(54) **EXTENDABLE SOUND-PROOFING STRUCTURE FOR AIRCRAFT**
EXPANDIERBARE SCHALLSCHUTZVORRICHTUNG FÜR FLUGZEUGE
STRUCTURE INSONORISANTE EXTENSIBLE POUR AÉRONEFS

(30) Priority: 29.06.2015 PT 1119615
(43) Date of publication of application: 02.05.2018
(73) Proprietor: Valis- Engenharia e Inovação, S.A., 2500-755 Caldas da Rainha (PT)
(72) Inventor: MARQUES LITO VELEZ GRILO, Vasco Maria, 2500-755 Caldas da Rainha (PT)
(74) Representative: do Nascimento Gomes, Rui
(86) International application number: PCT/IB2016/053719
(87) International publication number: WO 2017/001977

(56) References cited:
- DE-A1- 3 722 112
- DE-A1- 10 310 525
- GB-A- 2 485 583
- US-A- 1 780 102
- US-A- 3 096 847
- US-A- 6 016 888
- US-A1- 2003 111 292
- US-A1- 2010 038 480

## Description

### FIELD OF THE INVENTION

The present invention falls within the scope of soundproofing structures for aircrafts, typically existing in airports or in any infrastructures for aircrafts. In order to adequately testing and servicing an aircraft, the latter is required to undergo specific extreme conditions which generate high noise in its vicinity.

Therefore, soundproofing structures based on noise barriers are used for this purpose, surrounding the aircraft, and typically leaving an open area for entry and exit of the same.

It is the intention of the present invention to allow an installed infrastructure to be expandable, by providing an acoustic insulation as regards the noise resulting from aircrafts of different sizes.

### BACKGROUND OF THE INVENTION

The background of this invention is closely related to the noise barriers available on the market, which are typically U-shaped, protecting the surrounding areas from the noise generated by the engines of the aircraft to be tested. This U-shaped configuration means a structure with three barriers, i.e. two side barriers and one front barrier, wherein at least part of the two side barriers are parallel, including their ends which are not attached to the front barrier.

The patent application US 6.016.888 is a clear example of this technology, presenting barriers that are intended for insulating the noise generated by an aircraft and, in the particular case of this application, showing improvements as regards the stability of the structure under conditions of irregular winds.

The patent application DE 10310525 A1 also discloses a barrier structure of this same type which, although being focused on improving the details of a previous barrier, also comprises an array of three barriers that form the said U-shaped configuration.

The patent application GB2485583 discloses an aircraft ground run-up enclosure being scalable in height and having transitions to form a concave structure between the side walls and a rear wall.

### SOLVED TECHNICAL PROBLEMS

This invention was aimed at solving the problem associated to the lack of versatility of soundproofing structures for aircrafts which, due to the fact that the side barriers are parallel for most of their length, do not allow for an expansion. Thus, an airport that has a soundproofing infrastructure with capacity for smaller aircrafts cannot use it for larger aircrafts without destroying it and building a larger one that enables servicing and testing of both types of aircraft. In another example, an airport anticipating the need for larger aircrafts but that - for the moment - only receives smaller aircrafts, will be required to install a larger infrastructure since the beginning.

Thus, the present invention, through its different features, solves this problem by presenting itself as a suitable technological solution for aircraft noise insulation with expandability.

In a specific example, the structure of the present invention can be expanded to a size that accommodates aircrafts from class C to class D only, according to the classification of aircrafts and related soundproofing structures as defined by Annex 14 of the International Civil Aviation Organization (ICAO) [1].

### SUMMARY OF THE INVENTION

It is therefore the object of the present invention an expandable soundproofing structure for aircrafts, characterized in that it contains at least one front barrier (1) and two side barriers (2), wherein each side barrier (2) extends in a given direction and is arranged in such a way towards one of the ends of the front barrier (1) that the angle formed between each side barrier (2) and the front barrier (1) is greater than 90° and the free ends (3) of each one of the side barriers (2) are suitable to be expanded.

The free ends (3) of the side barriers (2) are the ends of these barriers that are more distant from the front barrier (1).

The side barriers (2) may or may not be physically joined to the front barrier (1).

This configuration of the side barriers (2) in relation to the front barrier (1), as well as in relation to each other, allows an opening to be formed as one runs along the side barriers, while diverting from the front barrier (1). Such a configuration allows not only to accommodate aircrafts of different sizes with a single soundproofing structure and in a smaller area, but also - with the side barriers (2) being susceptible of an increase in length - to accommodate larger aircrafts. The fact that the free ends (3) of each of the side barriers (2) are expandable provides an increased capacity of the soundproofing infrastructure for aircrafts.

In a more specific configuration of this invention, the angles formed between each of the side barriers (2) and the front barrier (1) are equal, so that the expansion of the structure is homogeneous in length.

### DESCRIPTION OF THE FIGURES

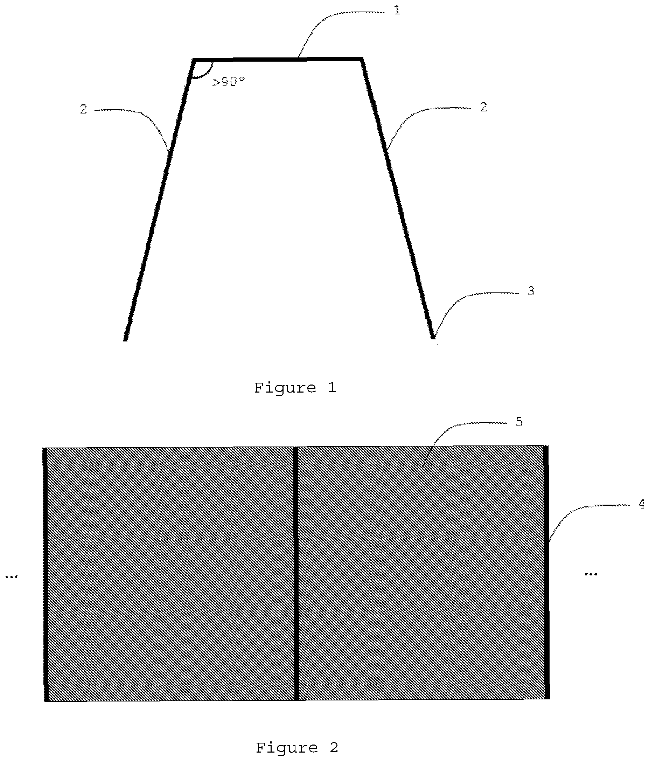

Figure 1 - illustrates the structure of the present invention in a plan top view, in which are visible the two side barriers (2) and one front barrier (2); and, in this particular case, the side barriers (2) forming equal angles with the front barrier (1), which are greater than 90°. The side barriers (2) are arranged according to the preferred embodiment of the present invention, next to opposite ends of the front barrier (1) and in one same side of the front barrier (1).
Figure 2 - illustrates the structure of the present invention, with the supporting beams (4) being shown connecting a plurality of barrier elements (5). This is a specific configuration of this invention.

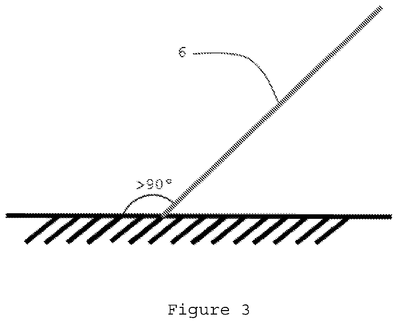

Figure 3 - illustrates the structure of the present invention showing the upper surface (6) of a front barrier (1), forming an angle greater than 90° relatively to the ground. In this figure, the rear part of the aircraft would be positioned on the left of the upper surface (6).

### DETAILED DESCRIPTION OF THE INVENTION

The present invention enables the expansion of soundproofing structures for aircrafts, through an innovative configuration of the said structure.

Therefore, the object of the present invention is an expandable soundproofing structure for aircrafts, comprising at least one front barrier (1) and two side barriers (2), wherein each side barrier (2) extends in a given direction and is arranged in such a way towards one of the ends of the front barrier (1) that the angle formed between each side barrier (2) and the front barrier (1) is greater than 90° and the free ends (3) of each one of the side barriers (2) are suitable to be expanded.

In a more specific configuration of the invention, the angles formed between each of the side barriers (2) and the front barrier (1) are equal, so that the expansion of the structure is homogeneous in length.

In another specific configuration of the invention, possibly cumulatively to the above mentioned ones, the angle formed between each side barrier (2) and the front barrier (1) is between 95 and 130°.

Furthermore, in a configuration also associated with this innovation, each of the free ends (3) of each of the side barriers (2) contains a supporting beam (4) which is suitable for its expansion in length.

In another configuration of the present invention, the structure is provided with supporting beams (4) that are suitable for fixing to the ground and, optionally, with physical connection installed between the front barrier (1) and the side barriers (2).

In another configuration of the present invention, the front barrier (1) and the side barriers (2) consist, each one, in a single piece.

In what concerns the materials of the elements of the present invention, the front barrier (1) and the side barriers (2) may be made up of a soundproofing material.

In an even more specific configuration of the invention, possibly cumulatively to the above, each of the free ends (3) of each of the side barriers (2) contains a supporting beam (4) which is suitable for its expansion in length. This element is a possible way to expand in width and length the area insulated by the soundproof structure of this invention.

In one configuration of the present invention alternative to that on which the front barrier (1) and the side barriers (2) consist, each, in a single piece, both the front barrier (1) and the side barriers (2) are comprised of a plurality of barrier elements (5), which in their turn consist of flat elements of a substantially rectangular shape.

In one specific configuration of the preceding one, the barrier elements (5) are joined together by means of supporting beams (4).

A further object of the present invention is the use of the structure described above, in its various - cumulative and alternative - configurations, in view of the embodiments described below, as regards the equipment for aircrafts noise insulation.

The present invention is suitable for aircrafts that fall within the scope of any classification of aircrafts and their relevant soundproofing structures, as defined by the aforementioned Annex 14 [1].

In a preferred embodiment, the aircrafts belong to classes C to F, according to the classification of aircrafts and corresponding soundproofing structures, as defined by the said Annex 14 [1].

### EMBODIMENTS OF THE INVENTION

In an embodiment of the object of the present invention, the soundproofing material of the side barriers (2) consists of expanded aluminium coated with thermo-bonded polyester powder.

In another embodiment, alternatively or cumulatively to the foregoing, the soundproofing material of the front barrier (1) consists of steel or aluminium.

In an embodiment, which is alternative or cumulative to the two described above, the rear surface (6) of the front barrier (1) and the side barriers (2) contain a non-combustible inert material.

In an alternative or cumulative embodiment to those described above, the front barrier (1) and the side barriers (2) are provided with a cover made of steel plate.

In an alternative or cumulative embodiment to those described above, the supporting beams (4) are made of steel.

As will be evident to the person skilled in the art, the invention should not be limited to the embodiments described herein, and various changes are possible which remain within the scope of the present invention.

Of course, the preferred methods presented above are susceptible of being combined, in different possible ways, with the repetition of all such combinations being herein avoided.

The invention should be limited only by the following claims.

### REFERENCES

*[1] "*Annex 14 - Aerodromes - Safety Management Standards and Recommended Practices", International Civil Aviation Organization, 2013.

## Claims

1. Soundproofing structure for aircrafts, which comprises at least one front barrier (1) and two side barriers (2), wherein each side barrier (2) is diverting from the front barrier (1), and each side barrier (2) is arranged in such a way towards one of the ends of the front barrier (1) that the angle formed between each side barrier (2) and the front barrier (1) is greater than 90°, **characterized in that** each side barrier (2) extends continuously in a given direction, thereby forming an increasing opening as one runs along the side barrier (2), and **in that** the structure is an expandable structure and **in that** the free ends (3) of each one of the side barriers (2) are suitable to be expanded.

2. A structure according to the previous claim, **characterized in that** the angles formed between each of the side barriers (2) and the front barrier (1) are equal.

3. A structure according to any of the previous claims, **characterized in that** the angle formed between each one of the side barriers (2) and the front barrier (1) is within the range of from 95 to 130°.

4. A structure according to any of the previous claims, **characterized in that** the side barriers (2) and the front barrier (1) form an angle greater than 90° relatively to the ground.

5. A structure according to any of the previous claims, **characterized in that** each of the free ends (3) of each one of the side barriers (2) contains a supporting beam (4), which is suitable for its expansion in length.

6. A structure according to the previous claims, **characterized in that** it also contains supporting beams (4) that are suitable for fixing to the ground and, optionally, physical connection between the front barrier (1) and the side barriers (2).

7. A structure according to any of the previous claims, **characterized in that** the front barrier (1) and the side barriers (2) are made of a soundproofing material.

8. A structure according to the previous claim, **characterized in that** the soundproofing material of the side barriers (2) is expanded aluminium coated with thermo-bonded polyester powder.

9. A structure according to any of the claims 7 or 8, **characterized in that** the soundproofing material of the front barrier (1) is steel or aluminium.

10. A structure according to any of the previous claims, **characterized in that** the rear surface (6) of the front barrier (1) and of the side barriers (2) contains a non-combustible inert material.

11. A structure according to any of the previous claims, **characterized in that** the front barrier (1) and the side barriers (2) are provided with a cover made of steel plate.

12. A structure according to any of the claims 6 to 11, **characterized in that** the supporting beams (4) are made of steel.

13. A structure according to any of the previous claims, **characterized in that,** in the front barrier (1) the side barriers (2) consist, each one, in one single piece.

14. A structure according to any of the claims 1 to 12, **characterized in that** both the front barrier (1) and the side barriers (2) are comprised of a plurality of barrier elements (5), which in their turn consist of flat elements **and in that,** optionally, the barrier elements (5) are joined together by means of supporting beams (4).

15. Use of the structure according to any of the previous claims, **characterized in that** it is used in equipment for aircrafts noise insulation.

## Patentansprüche

1. Schallschutzstruktur für Luftfahrzeuge, welche mindestens eine Vorderbarriere (1) und zwei Seitenbarrieren (2) umfasst, worin jede Seitenbarriere (2) von der Vorderbarriere (1) abweicht, und jede Seitenbarriere (2) solchermaßen in Richtung eines der Enden der Vorderbarriere (1) angeordnet ist, dass der Winkel, der zwischen jeder der Seitenbarrieren (2) und der Vorderbarriere (1) gebildet wird, größer als 90° ist, **dadurch gekennzeichnet, dass** sich jede Seitenbarriere (2) stetig in eine bestimmte Richtung erstreckt, dabei entsteht eine zunehmende Öffnung, wenn man entlang der Seitenbarrieren (2) läuft, und, **dass** die Struktur eine erweiterbare Struktur ist und, **dass** die freien Enden (3) jeder der Seitenbarrieren (2) geeignet sind, um erweitert zu werden.

2. Eine Struktur nach vorherigem Anspruch, **dadurch gekennzeichnet, dass** die Winkel, die zwischen jeder der Seitenbarrieren (2) und der Vorderbarriere (1) gebildet werden, gleich sind.

3. Eine Struktur nach jedem der vorherigen Ansprüche, **dadurch gekennzeichnet, dass** der Winkel, der zwischen jeder der Seitenbarrieren (2) und der Vorderbarriere (1) zwischen 95° und 130° liegt.

4. Eine Struktur nach jedem der vorherigen Ansprüche, **dadurch gekennzeichnet, dass** die Seitenbarrieren (2) und die Vorderbarriere (1) zum Boden einen Winkel größer als 90° bilden.

5. Eine Struktur nach jedem der vorherigen Ansprüche, **dadurch gekennzeichnet, dass** jedes der freien Enden (3) jeder der Seitenbarrieren (2), einen Stützbalken (4) umfasst, welcher für seine Erweiterung in die Länge geeignet ist.

6. Eine Struktur nach jedem der vorherigen Ansprüche, **dadurch gekennzeichnet, dass** sie auch Stützbalken (4) umfasst, die geeignet sind, um am Boden befestigt zu werden und, gegebenfalls, eine physische Verbindung zwischen der Vorderbarriere (1) und den Seitenbarrieren (2) zu ermöglichen.

7. Eine Struktur nach jedem der vorherigen Ansprüche, **dadurch gekennzeichnet, dass** die Vorderbarriere (1) und die Seitenbarrieren (2) aus Schallschutzmaterial sind.

8. Eine Struktur nach dem vorherigen Anspruch, **dadurch gekennzeichnet, dass** das Schallschutzmaterial der Seitenbarrieren (2) Aluminiumstreckmetall ist, welches von thermisch verfestigtem Polyesterpulver beschichtet ist.

9. Eine Struktur nach jedem der Ansprüche 7 oder 8, **dadurch gekennzeichnet, dass** das Schallschutzmaterial der Vorderbarriere (1) Stahl oder Aluminium ist.

10. Eine Struktur nach jedem der vorherigen Ansprüche, **dadurch gekennzeichnet, dass** die hintere Oberfläche (6) der Vorderbarriere (1) und der Seitenbarrieren (2) ein nicht brennbares, träges Material enthält.

11. Eine Struktur nach jedem der vorherigen Ansprüche, **dadurch gekennzeichnet, dass** die Vorderbarriere (1) und die Seitenbarrieren (2) mit einer Abdeckung aus Stahlblech versehen sind.

12. Eine Struktur nach jedem der Ansprüche 6 bis 11, **dadurch gekennzeichnet, dass** die Stützbalken (4) aus Stahl sind

13. Eine Struktur nach jedem der vorherigen Ansprüche, **dadurch gekennzeichnet, dass** jede der Seitenbarrieren (2) in der Vorderbarriere (1) aus einem Einzelstück bestehen.

14. Eine Struktur nach jedem der Ansprüche 1 bis 12, **dadurch gekennzeichnet, dass** sowohl die Vorderbarriere (1), als auch die Seitenbarrieren (2) aus einer Vielzahl von Sperrkörpern (5) bestehen, welche wiederum aus flachen Elementen bestehen, **und, dass,** gegebenfalls, die Sperrkörper (5) durch die Stützbalken (4) zusammengefügt sind.

15. Nutzung der Struktur nach jedem der vorherigen Ansprüche, **dadurch gekennzeichnet, dass** sie in der Ausrüstung von Schallisolierung von Luftfahrzeugen genutzt wird.

## Revendications

1. Structure insonorisante pour aéronefs, qui comprend au moins une barrière antérieure (1) et deux barrières latérales (2), où chaque barrière latérale (2) dévie de la barrière antérieure (1) et chaque barrière latérale (2) est disposée de telle sorte, par rapport à l'une des extrémités de la barrière antérieure (1), que l'angle formé entre chaque barrière latérale (2) et la barrière antérieure (1) est supérieur à 90°, **caractérisée en ce que** chaque barrière latérale (2) s'étend de manière continue selon une certaine direction, en formant ainsi une ouverture progressivement croissante le long de la barrière latérale (2), et **en ce que** la structure est une structure extensible et **en ce que** les extrémités libres (3) de chacune des barrières latérales (2) sont adaptées pour être extensibles.

2. Structure selon la revendication précédente, **caractérisée en ce que** les angles formés entre chacune des barrières latérales (2) et la barrière antérieure (1) sont égaux.

3. Structure selon l'une quelconque des revendications précédentes, **caractérisée en ce que** l'angle formé entre chacune des barrières latérales (2) et la barrière antérieure (1) se situe dans la plage de 95 à 130°.

4. Structure selon l'une quelconque des revendications précédentes, **caractérisée en ce que** les barrières latérales (2) et la barrière antérieure (1) forment un angle supérieur à 90° relatif au sol.

5. Structure selon l'une quelconque des revendications précédentes, **caractérisée en ce que** chacune des extrémités libres (3) de chacune des barrières latérales (2) comporte une poutre de support (4), qui est appropriée pour son extension en longueur.

6. Structure selon les revendications précédentes, **caractérisée en ce qu'**elle comporte également des poutres de support (4) qui sont appropriées pour la fixation au sol et **en ce que**, facultativement, la connexion physique entre la barrière antérieure (1) et les barrières latérales (2).

7. Structure selon l'une quelconque des revendications précédentes, **caractérisée en ce que** la barrière antérieure (1) et les barrières latérales (2) sont réalisées dans un matériau insonorisant.

8. Structure selon la revendication précédente, **caractérisée en ce que** le matériau insonorisant des barrières latérales (2) est l'aluminium expansé avec un revêtement de poudre de polyester thermolié.

9. Structure selon l'une quelconque des revendications 7 ou 8, **caractérisée en ce que** le matériau insonorisant de la barrière antérieure (1) est l'acier ou l'aluminium.

10. Structure selon l'une quelconque des revendications précédentes, **caractérisée en ce que** la surface arrière (6) de la barrière antérieure (1) et des barrières latérales (2) contient un matériau inerte non combustible.

11. Structure selon l'une quelconque des revendications précédentes, **caractérisée en ce que** la barrière antérieure (1) et les barrières latérales (2) sont pourvues d'un couvercle en plaque d'acier.

12. Structure selon l'une quelconque des revendications 6 à 11, **caractérisée en ce que** les poutres de support (4) sont réalisées en acier.

13. Structure selon l'une quelconque des revendications précédentes, **caractérisée en ce que**, dans la barrière antérieure (1), les barrières latérales (2) consistent chacune en une seule pièce.

14. Structure selon l'une quelconque des revendications 1 à 12, **caractérisée en ce que** la barrière antérieure (1) et les barrières latérales (2) sont constituées d'une pluralité d'éléments de barrière (5), lesquels à leur tour sont constitués d'éléments plats et **en ce que**, facultativement, les éléments de barrière (5) sont joints au moyen de poutres de support (4).

15. Utilisation de la structure selon l'une quelconque des revendications précédentes, **caractérisée en ce qu'**elle est utilisée dans des équipements d'insonorisation du bruit des aéronefs.
